Europäisches Patentamt

European Patent Office

Office européen des brevets

(19)

(11) **EP 1 095 358 B1**

(12) **FASCICULE DE BREVET EUROPEEN**

(45) Date de publication et mention
de la délivrance du brevet:
**01.10.2003  Bulletin 2003/40**

(21) Numéro de dépôt: **99929456.4**

(22) Date de dépôt: **09.07.1999**

(51) Int Cl.⁷: **G06T 17/00**

(86) Numéro de dépôt international:
**PCT/FR99/01677**

(87) Numéro de publication internationale:
**WO 00/004503 (27.01.2000 Gazette 2000/04)**

(54) **PROCEDE DE MODELISATION D'OBJETS OU DE SCENES 3D**

VERFAHREN ZUR MODELLIERUNG VON GEGENSTÄNDEN ODER DREIDIMENSIONALEN SZENEN

METHOD FOR MODELLING THREE-DIMENSIONAL OBJECTS OR SCENES

(84) Etats contractants désignés:
**DE ES GB IT**

(30) Priorité: **16.07.1998  FR 9809316**

(43) Date de publication de la demande:
**02.05.2001  Bulletin 2001/18**

(73) Titulaires:
• **FRANCE TELECOM**
**75015 Paris (FR)**
• **TELEDIFFUSION DE FRANCE**
**75015 Paris (FR)**

(72) Inventeur: **LERAY, Pascal**
**F-35590 Saint Gilles (FR)**

(74) Mandataire: **Bentz, Jean-Paul et al**
**Cabinet Ballot**
**4 rue du Général Hoche**
**BP 855**
**56100 Lorient (FR)**

(56) Documents cités:
WO-A-97/35439        FR-A- 2 744 586
US-A- 5 309 522        US-A- 5 714 997

• LERAY P: "New advances in neuro-visual simulation and symbolic extraction for real world computing, 3D image analysis and 3D object digitization" ELEVENTH EUROGRAPHICS WORKSHOP ON GRAPHICS HARDWARE, PROCEEDINGS OF ELEVENTH EUROGRAPHICS WORKSHOP ON GRAPHICS HARDWARE, POITIERS, FRANCE, 26-27 AUG. 1996, pages 79-89, XP002100910 1996, Yorktown Heights, NY, USA, IBM T J Watson Res. Center, USA
• JONES G A: "CONSTRAINT, OPTIMIZATION, AND HIERARCHY: REVIEWING STEREOSCOPIC CORRESPONDENCE OF COMPLEX FEATURES" COMPUTER VISION AND IMAGE UNDERSTANDING, vol. 65, no. 1, janvier 1997 (1997-01), pages 57-78, XP000685839

EP 1 095 358 B1

## Description

La présente invention se situe dans le domaine de la représentation virtuelle d'objets ou de scènes en trois dimensions. Elle concerne plus particulièrement un procédé de modélisation d'objets tridimensionnels et son application à la visualisation temps réel.

De tels procédés trouvent actuellement de plus en plus d'applications dans le traitement d'images. En particulier, ils peuvent être utilisés pour l'analyse de scènes tridimensionnelles (3D) avec extraction de la géométrie et de la dynamique des objets présents dans la scène. Comme domaines d'application, on peut alors citer la robotique, le pilotage automatique, la numérisation automatique d'objets ou la recherche sémantique pour l'archivage d'images.

Les procédés de modélisation existants se regroupent essentiellement en trois catégories:

- les procédés de modélisation utilisant des logiciels spécifiques;
- les procédés de modélisation par exploration laser, sonique ou mécanique des objets dans les trois dimensions;
- les procédés de modélisation se basant sur les techniques de photomodélisation;

Les procédés de modélisation utilisant un logiciel spécifique sont généralement les plus simples. Ces procédés sont des procédés interactifs en ce sens qu'ils nécessitent un opérateur pour dialoguer avec le logiciel. Le logiciel de modélisation met à la disposition de l'opérateur toute une panoplie de formes géométriques mathématiques tridimensionnelles simples (cubes, sphères,...) et complexes (surfaces de révolution,...) ainsi que des opérations booléennes (union, intersection, différence,...) permettant de combiner les formes entre elles. Le principal inconvénient de ce procédé est qu'il nécessite un opérateur très expérimenté capable d'analyser la structure des objets en terme de primitives et de fonctions géométriques connues du logiciel.

S'agissant des systèmes de modélisation par exploration laser, sonique, magnétique ou mécanique, ils consistent à balayer l'objet à modéliser avec un rayonnement approprié. Le processus de balayage est automatique mais les fenêtres d'exploration doivent toutefois être précisées par un opérateur. Cette méthode permet d'obtenir une définition très précise de l'objet à modéliser, cependant elle ne tient pas compte des caractéristiques topologiques de l'objet. En effet, le nombre de points obtenus pour représenter l'objet à modéliser ne dépend que du pas d'exploration en x, en y et en z défini par l'opérateur. En conséquence, avec ce procédé, un objet de forme simple, par exemple un cube, et un objet de forme plus complexe de même taille sont représentés avec un même nombre de points, quelques centaines voire quelques milliers de points, alors qu'une telle abondance de points ne se justifie que pour l'objet de formé complexe. Cette technique de modélisation est particulièrement utilisée en CAO (Conception Assistée par Ordinateur) pour le contrôle de machines-outils chargés de reproduire un objet physique existant. En effet, dans ce cas, la précision des surfaces à reproduire est fondamentale tandis que le nombre de points obtenu est secondaire. Il en est tout autrement en représentation virtuelle 3D multimédia (par exemple en télévision ou au cinéma) où le nombre de points, de sommets ou de polygones pour conserver un réalisme suffisant est fondamental. Dans ce cas, l'image représentant l'objet ou la scène est le résultat final alors qu'en CAO, l'image représentant l'objet est un outil pour réaliser physiquement l'objet. L'image n'est pas le résultat final.

Enfin, la technique de photomodélisation repose sur l'analyse de couples d'images stéréoscopiques ou multivues. Cette modélisation est effectuée manuellement. Un opérateur détermine les sommets des polygones constitutifs de l'objet à modéliser sur une première vue. Il détermine également sur les autres vues les points correspondant à ces sommets et établit des relations entre les points d'une même image de façon à définir les polygones constituant l'objet à modéliser. Le logiciel calcule ensuite la disparité stéréoscopique entre les différentes vues pour en déduire les coordonnées x, y, z de chacun des sommets des polygones par rapport à un point de référence. Cette méthode manuelle est très lente et se rapproche de la technique de modélisation par logiciel décrite précédemment. Elle est par conséquent inutilisable à l'échelon industriel.

La présente invention vise à pallier les inconvénients précités de l'état antérieur de la technique en proposant un procédé de modélisation d'objets ou de scènes 3D qui soit automatique, rapide et utilisable à l'échelon industriel. Pour cela, on prévoit d'utiliser des techniques d'analyse d'image basées sur les caractéristiques psychovisuelles du cortex visuel humain.

Aussi, l'invention a pour objet un procédé de modélisation d'objet ou de scène tridimensionnel à partir de N images spatialement ou temporellement différentes représentant ledit objet ou ladite scène, N≥2, destiné à produire un modèle dudit objet ou de ladite scène consistant en une pluralité de points caractéristiques et une pluralité de polygones définis à partir desdits points caractéristiques et constituant les diverses facettes dudit objet ou de ladite scène, caractérisé en ce qu'il comporte les étapes suivantes

- détecter dans chaque image des pixels caractéristiques relatifs aux points caractéristiques dudit objet ou de ladite scène,
- associer les pixels caractéristiques des N images se rapportant au même point caractéristique dudit objet ou de ladite scène,

- mesurer la disparité spatiale entre les N images à partir de la différence de position de chaque point caractéristique dans les N images et en déduire les coordonnées spatiales des points caractéristiques dudit objet ou de ladite scène,
- effectuer une étape. de maillage des points caractéristiques pour former les polygones constituant les diverses facettes dudit objet ou de ladite scène.

Pour détecter les pixels caractéristiques dans les N images, on effectue de préférence, pour chaque image IM(t) composée de I.J. pixels P(i,j) ayant des coordonnées telles que 0<i<I-1 et 0<j<J-1 et des intensités lumineuses L(i,j,t) et pour chaque pixel-P(i,j) de l'image, les étapes suivantes :

- effectuer pour chaque pixel P(i,j) de l'image, D doubles filtrages directionnels pour D directions prédéterminées, définis chacun par les deux relations suivantes :

$$A[(\partial G(i,j)/\partial \rho)_\alpha, t] = \sum_{m=-k}^{m=k} \sum_{n=-k}^{n=k} L(i+m, j+n, t).(\partial G(i+m, j+n)/\partial \rho)_\alpha$$

et

$$A[(\partial^2 G(i,j)/\partial \rho^2)_\alpha, t] = \sum_{m=-k}^{m=k} \sum_{n=-k}^{n=k} L(i+m, j+n, t).(\partial^2 G(i+m, j+n)/\partial \rho^2)_\alpha$$

dans lesquelles k est un entier prédéterminé au moins égal à 1, L(i+m,j+n,t) est l'intensité lumineuse à un pixel P (i+m,j+n) voisin du pixel P(i,j), et $(\partial G(i+m,j+n,t)/\partial \rho)_\alpha$ et $(\partial G^2(i+m,j+n,t)/\partial \rho^2)_\alpha$ sont des dérivées directionnelles du premier ordre et du second ordre suivant la direction prédéterminée respective ($\alpha$) d'une fonction bidimensionnelle prédéterminée G, de manière à former I.J vecteurs colonnes de pixels composés de 2D composantes vectorielles,
- calculer une fonction de courbure selon la relation :

$$CG(i,j,t) =$$

$$\sum_{m=-k}^{m=k} \sum_{n=-k}^{n=k} L(i+m, j+n, t). \left[ \frac{\partial^2 G(i+m, j+n)}{\partial x^2} \cdot \frac{\partial^2 G(i+m, j+n)}{\partial y^2} - \frac{\partial^2 G(i+m, j+n)}{\partial x. \partial y} \right]$$

- détecter la direction présentant la plus grande activité en sélectionnant la plus grande dérivée directionnelle du premier ordre pour le pixel P(i,j),
- calculer une fonction d'iso-intensité (CI) dépendant de la dérivée directionnelle du second ordre pour une direction perpendiculaire à la direction présentant la plus grande activité; et
- comparer les fonctions de courbure et les fonctions d'iso-intensité par rapport à des seuils prédéterminés, les. pixels caractéristiques présentant au moins l'une des fonctions de courbure. ou d'isoluminance supérieure à l'un respectif de deux seuils prédéterminés.

Pour associer les pixels caractéristiques des N images se rapportant au même point caractéristique dudit objet ou de ladite scène, on effectue selon l'invention les étapes suivantes:

- détermination d'une matrice fondamentale à partir de pixels caractéristiques primaires ayant des vecteurs colonnes identiques dans les N images, cette matrice établissant une correspondance entre les pixels des N images,
- association des pixels caractéristiques des N images se rapportant à même point caractéristique à l'aide de la matrice fondamentale.

Selon un mode de réalisation en variante, le procédé de l'invention comporte en outre une étape de regroupement perceptif pour regrouper les pixels de chaque image appartenant à une zone perceptuellement homogène de l'image en effectuant, pour chaque image et chaque pixel, Q itérations d'une fonction telle que :

$$A_q[f(i,j),t] = \beta.A_{q-1}[f(i,j),t]$$

$$+ \sum_{m=-h}^{m=h}\sum_{n=-h}^{n=h}\phi(P(i,j),P(i+m,j+n)).A_{q-1}[f(i+m,j+n),t]$$

$$\text{avec } (m,n)\neq(0,0)$$

où

$A_q[f(i,j),t]$ représente l'activité du pixel courant $P(i,j)$ dans l'image IM(t), associée à la fonction caractéristique f à l'itération q,

$A_{q-1}[f(i+m,j+n),t]$ représente l'activité d'un pixel $P(i+m, j+n)$ voisin du pixel $P(i,j)$, associée à la même fonction caractéristique f mais à l'itération précédente q-1, c'est-à-dire l'activité du pixel voisin est relative à l'itération précédente,

$\beta$ est une constante sensiblement inférieure à 1,

q est un entier compris entre 0 et Q, et

$\phi(P(i,j), P(i+m,j+n))$ est un coefficient de couplage entre les pixels $P(i,j)$ et $P(i+m, j+n)$ inférieur à 1,

et en regroupant dans une table tous les pixels voisins dont l'activité converge après Q itérations vers la même valeur limite.

L'invention concerne également l'application de ce procédé à la visualisation temps réel d'un objet ou d'une scène. Cette visualisation temps réel est caractérisée en ce que l'objet ou la scène est préalablement modélisé suivant E échelles et en ce que le modèle d'objet ou de scène qui est visualisé, est choisi parmi les E modèles résultant des E échelles, ce choix étant fonction de la distance d'observation de l'objet ou de la scène.

D'autres caractéristiques et avantages de l'invention apparaîtront à la lecture de la description détaillée qui suit et qui est faite en référence aux figures annexées, parmi lesquelles

- la figure 1 représente un organigramme des étapes du procédé de modélisation de l'invention selon un premier de réalisation,
- la figure 2 représente un schéma d'une image initiale sur laquelle est appliquée le procédé de modélisation de l'invention,
- la figure 3 illustre l'étape d'appariement du procédé de l'invention, et
- la figure 4 représente un organigramme des étapes du procédé de modélisation selon un second mode de réalisation.

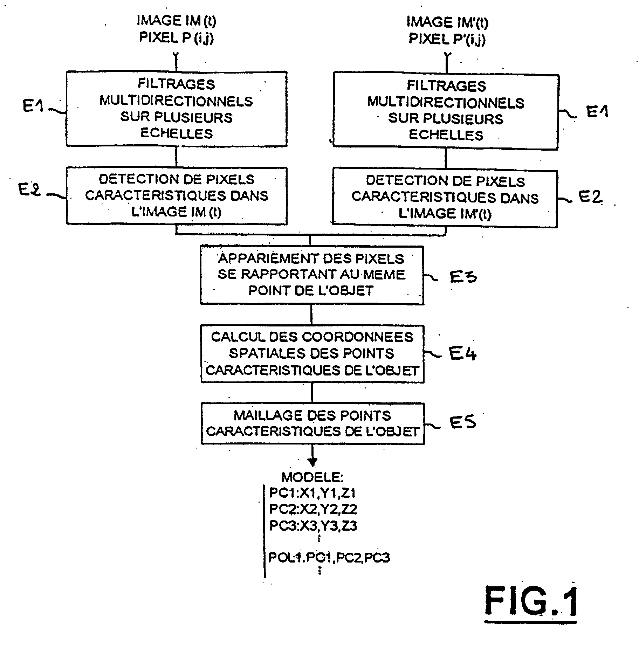

En référence à la figure 1, le procédé de modélisation d'objet ou de scène 3D selon l'invention comporte, dans sa version la plus simple, cinq étapes E1, E2, E3, E4, et E5 pour produire un modèle caractérisant ledit objet ou ladite scène. Le modèle obtenu en fin de procédé se présente sous la forme d'une pluralité de points caractéristiques (PC1, PC2, PC3...) de l'objet ou de la scène définis par leurs coordonnées x, y, z et d'une pluralité de polygones (POL1...) représentant les différentes facettes de l'objet ou de la scène. Les points caractéristiques déterminent les sommets des polygones constitutifs de l'objet. Avantageusement, ce modèle peut également comporter des données sur la texture de chaque polygone ainsi que des informations sur la cinématique de ces points, par exemple sous la forme d'un vecteur rotation et d'un vecteur translation associés à chaque polygone du modèle.

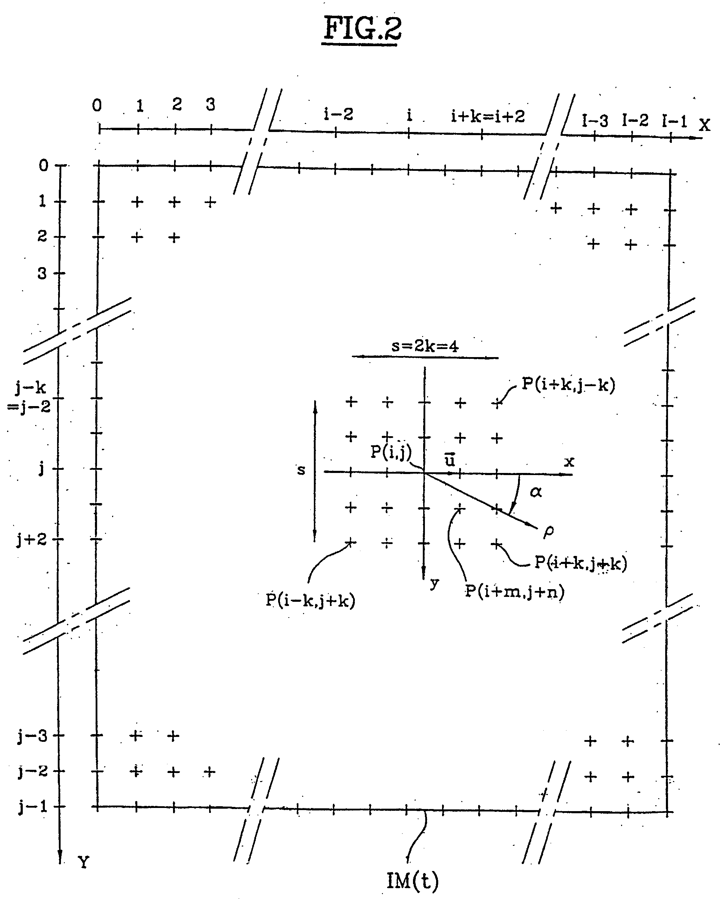

Le procédé de modélisation nécessite au moins deux images. Pour rendre le présent exposé plus simple et plus clair, le procédé exposé ci-après et les figures s'y rapportant illustrent un exemple de procédé effectuant une modélisation à partir de deux images, IM(t) et IM'(t), reçues et mémorisées à un instant t à une étape initiale EO préalable à celles du procédé de l'invention. Les images IM(t) et IM'(t) sont des vues de l'objet spatialement ou temporellement différentes. Elles correspondent donc soit à des images fixes d'une scène prises sous des angles de vue différents, soit à des images extraites d'une séquence d'images ...IM(t-Δt), IM(t), IM(t+Δt),... montrant la scène (Δt désigne la période d'image). Dans tout l'exposé, on suppose que chaque image est constituée de I.J pixels repérés par une abscisse i le long d'un axe Ox et une ordonnée j le long d'un axe Oy, avec i compris entre 0 et I-1 et j compris entre 0 et J-1 comme présenté à la figure 2.

Les étapes du procédé de modélisation selon l'invention sont effectuées par exemple dans analyseur d'image numérique à processeurs qui reçoit, convertit numériquement si nécessaire, et extrait les images IM(t) et IM'(t). Ces images sont ensuite analysées et traitées de manière à modéliser en trois dimensions la scène ou l'objet représenté dans ces deux images.

Les étapes du procédé de modélisation sont en pratique mises en oeuvre dans plusieurs couches d'un réseau neuronal qui reçoit successivement en entrée les intensités lumineuses L(i,j,t) des pixels des deux images IM(t) et IM'(t) à analyser ainsi que les coordonnées i, j des pixels correspondants. Un tel analyseur est par exemple configuré comme le système de traitement de signaux à opérateurs neuronaux décrit dans la demande de brevet FR-A-2704669.

Les deux premières étapes E1 et E2 du procédé de modélisation sont effectuées séparément sur chacune des images IM(t) et IM'(t). Ces étapes sont des étapes d'analyse d'image correspondant à des traitements de plus en plus fins dans les couches cellulaires du cortex visuel humain. Elles visent à détecter, dans les images IM(t) et IM'(t), des points caractéristiques de l'objet ou de la scène à modéliser (par exemple, les sommets d'un polyèdre).

La première étape E1 vise à effectuer des filtrages directionnels non orthogonaux des deux images, IM(t) et IM'(t), suivant plusieurs échelles de manière à générer pour chacune un vecteur colonne appelé hyperpixel.

La seconde étape E2 vise à détecter dans ces deux images des pixels caractéristiques relatifs à des points caractéristiques de l'objet ou de la scène à modéliser.

Ces deux étapes d'analyse ont fait l'objet d'une demande de brevet FR-A-2744586 déposé au nom du présent demandeur et dont les passages importants pour la compréhension de la présente invention sont reportés dans le présent exposé.

La troisième étape, E3, du procédé de l'invention consiste à apparier les pixels caractéristiques des images IM(t) et IM'(t) se rapportant au même point caractéristique de l'objet.

La quatrième étape, E4, consiste à mesurer la disparité stéréoscopique entre les deux imagés IM(t) et IM'(t) et à en déduire les coordonnées x, y, z des points caractéristiques de l'objet.

Enfin, la cinquième étape, E5, consiste à effectuer un maillage entre les points caractéristiques de l'objet de manière à générer les polygones constitutifs de l'objet ou de la scène à modéliser.

Par ailleurs, le système de modélisation d'objet ou de scène tridimensionnel à partir d'images fournies par des paires de caméras du document US-A-5714997 divulgue l'association de chacun des pixels des images de chacune des deux caméras et la mesure de la disparité spatiale entre les images fournies par les caméras à partir de la différence de position de chaque pixel.

La première étape E1 du procédé de l'invention consiste à filtrer les images IM(t) et IM'(t) suivant plusieurs directions et sur plusieurs échelles de manière à générer pour chaque pixel P(i,j) de l'image un vecteur colonne appelé hperpixel. Pour ne pas surcharger l'exposé, les étapes E1 et E2 ne sont décrites que pour l'image IM(t).

Pendant cette étape, l'image IM(t) est traitée par échelle. Une échelle est définie par un motif carré s-par-s ayant un côté de s = (2k)u et centré sur un pixel courant P(i,j) où u est le module de vecteur unitaire séparant deux pixels consécutifs et k un nombre entier positif déterminant l'échelle. Par exemple dans la figure 2, k est égal à 2 et le motif carré autour du point P(i,j) comprend les $(2k+1)^2$ = 25 pixels P(i-k,j-k) à P(i+k, j+k). En pratique, aucun motif n'est associé aux pixels sur les lignes de l'image ayant pour ordonnées 0 à k-1, et (I-1)-(k-1) à (I-1) et sur les colonnes de l'image ayant pour abscisses 0 à k-1 et (J-1)-(k-1) à (J-1). La taille de l'échelle s = 2k peut être par exemple choisie entre 2 et 16.

A l'étape E1, pour une échelle donnée s = 2k, l'invention associe plusieurs fonctions dépendant d'une fonction de Gauss bidimensionnelle telle que :

$$G(x,y) = \frac{e^{-\frac{(x^2 + y^2)}{2s^2}}}{\sqrt{2\pi}.s}$$

où x et y sont les coordonnées dans un repère centré entre le pixel courant P(i,j) dans le motif [(i-k, j-k), (i+k, j+k)].

Pour chaque pixel P(i,j) avec un motif à une échelle donnée s, la dérivée directionnelle du premier ordre et la dérivée directionnelle du second ordre sont calculées pour chacune de D directions dans le domaine spatial du motif associé de la manière suivante. Ces dérivées constituent les fonctions de transfert élémentaires de filtres directionnels simulant des traitements produits par des cellules simples du cortex visuel humain.

La dérivée directionnelle du premier ordre $(\partial G(x,y)/\partial\rho)_\alpha$ de la fonction de Gauss G(x,y) suivant une direction donnée $\rho$ formant un angle $\alpha$ avec l'axe Ox est la suivante :

$$(\frac{\partial G(x,y)}{\partial\rho})_\alpha = \frac{\partial G}{\partial x}\cos\alpha + \frac{\partial G}{\partial y}\sin\alpha$$

avec

$$\frac{\partial G(x,y)}{\partial y} = -\frac{x}{s^2}.G(x,y)$$

et

$$\frac{\partial G(x,y)}{\partial y} = -\frac{y}{s^2} \cdot G(x,y)$$

Cette dérivée directionnelle du premier ordre s'exprime en fonction du gradient $\nabla G(x,y)$ et plus précisément des module $|\nabla G(x,y)|$ et argument $\theta_1$ du gradient :

$$|\nabla G(x,y)| = \sqrt{(\partial G/\partial x)^2 + (\partial G/\partial y)^2}$$

$$\cos(\theta_1) = (\partial G/\partial x)/|\nabla G(x,y)|$$

$$\sin(\theta_1) = (\partial G/\partial y)/|\nabla G(x,y)|$$

soit

$$\left(\frac{\partial G}{\partial \rho}\right)_\alpha = |\nabla G|\frac{\partial G/\partial x}{|\nabla G|}\cos\alpha + |\nabla G|\frac{\partial G/\partial y}{|\nabla G|}\sin\alpha$$

$$\left(\frac{\partial G}{\partial \rho}\right)_\alpha = |\nabla G| \cdot \cos(\theta_1 - \alpha)$$

La dérivée directionnelle du second ordre $(\partial G^2(x,y)/\partial\rho^2)_\alpha$ de la fonction de Gauss $G(x,y)$ suivant la direction donnée $\rho$ est la suivante :

$$\left(\frac{\partial^2 G(x,y)}{\partial^2 \rho}\right)_\alpha = \frac{\partial^2 G}{\partial x^2}\cos^2\alpha + \frac{\partial^2 G}{\partial y^2}\sin^2\alpha + 2\frac{\partial^2 G}{\partial x.\partial y}\sin\alpha.\cos\alpha$$

avec

$$\frac{\partial G(x,y)}{\partial x^2} = \left(\frac{x}{s^4} - \frac{1}{s^2}\right) \cdot G(x,y)$$

$$\frac{\partial^2 G(x,y)}{\partial y^2} = \left(\frac{y^2}{s^4} - \frac{1}{s^2}\right) \cdot G(x,y)$$

$$\frac{\partial^2 G(x,y)}{\partial x.\partial y} = \left(\frac{x^2}{s^4} - \frac{1}{s^2}\right) \cdot G(x,y)$$

Cette dérivée directionnelle du second ordre s'exprime en fonction du Laplacien $\nabla^2 G(x,y)$ et d'un second argument $\theta_2$ tels que :

$$\nabla^2 G(x,y) = \left(\frac{\partial^2 G}{\partial x^2} + \frac{\partial^2 G}{\partial y^2}\right)$$

$$\cos(2.\theta_2) = K/R$$

$$\sin (2.\theta_2) = (\partial^2 G/\partial x.\partial y)/R,$$

avec

$$K = \frac{1}{2}(\frac{\partial^2 G}{\partial x^2} - \frac{\partial^2 G}{\partial y^2})$$

$$R = \sqrt{K^2 + (\partial^2 G/\partial x \partial y)}$$

soit

$$(\frac{\partial^2 G}{\partial \rho^2})_\alpha = \frac{\partial^2 G}{\partial x^2}(\frac{1 + \cos 2\alpha}{2}) + \frac{\partial^2 G}{\partial y^2}(\frac{1 - \cos 2\alpha}{2}) + \frac{\partial^2 G}{\partial x.\partial y}\sin 2\alpha$$

$$(\frac{\partial^2 G}{\partial \rho^2})_\alpha = \frac{1}{2}(\frac{\partial^2 G}{\partial x^2} + \frac{\partial^2 G}{\partial y^2}) + \left[\frac{1}{2R}(\frac{\partial^2 G}{\partial x^2} - \frac{\partial^2 G}{\partial y^2})\right]R\cos 2\alpha + R\left[\frac{\partial^2 G}{\partial x.\partial y}\frac{1}{R}\right]\sin 2\alpha$$

$$(\partial G/\partial \rho^2)_\alpha = \triangledown^2 G/2 + R.\cos(2\theta_2 - 2\alpha)$$

Les dérivées directionnelles des premier et second ordres $(\partial G/\partial \rho)_\alpha$ et $(\partial^2 G/\partial \rho^2)_\alpha$ pour une direction donnée $\rho$ peuvent être alors calculées puisqu'elles sont dépendantes des dérivées suivantes :

$\partial G/\partial x$, $\partial G/\partial y$, $\partial^2 G/\partial x^2$, $\partial^2 G/\partial y^2$ et $\partial^2 G/\partial x.\partial y$

Ainsi, pour chaque pixel courant P(i,j), des filtrages non orthogonaux sont réalisés pour les fonctions précédentes et pour une échelle donnée s = 2k selon le produit scalaire suivant qui représente une moyenne pondérée par les intensités lumineuses dans le motif de l'échelle autour du pixel courant :

$$\mathbf{A[f(i,j),t]} = \sum_{m=-k}^{m=k} \sum_{n=-k}^{n=k} L(i+m,j+n,t).f(i+m,j+n)$$

où L(i,j,t) est l'intensité lumineuse au pixel P(i,j) dans l'image IM(t) et f(i,j) est l'une des fonctions $(\partial G/\partial \rho)_\alpha$ et $(\partial^2 G/\partial \rho^2)_\alpha$ avec $\alpha$ prenant D valeurs prédéterminées. L'entier D est au moins égal à 2.

Typiquement D est égal à 8 et correspond à huit directions principales décalées de $\pi/D = \pi/8$ à partir de l'axe Ox. Ainsi, un vecteur colonne V(i,j,t) dit hyperpixel et comprenant F = 2D = 16 composantes A[f(i,j),t] est associé à chaque pixel P(i,j) de l'image IM(t), f(i,j) prenant successivement les valeurs $((\partial G/\partial \rho)_0, (\partial^2 G/\partial \rho^2)_0...(\partial G/\partial \rho)_{7\pi/8}, (\partial^2 G/\partial \rho^2)_{7\pi/8})$. Si, par exemple E=5 échelles s = 2k = 2, 4, 8, 16 et 32 sont considérées, chaque vecteur colonne V(i,j,t) comprend E.F. = 80 composantes.

Les (E.F) opérations de filtrage sont de préférence réalisées par une première couche de réseau de neurones dans laquelle chaque cellule neuronale dans l'analyseur d'image effectue un produit scalaire respectif analogue au précédent. Les valeurs d'intensité lumineuse et les coordonnées des pixels sont fournies par une couche d'entrée aux cellules neuronales dans la première couche. Les valeurs des fonctions f constituent des coefficients synaptiques. (E. F) cellules neuronales sont ainsi associées au pixel courant P(i,j) pour établir E.F composantes vectorielles de l'hyperpixel correspondant. La valeur A[f(i,j),t] représente l'activité de la cellule neuronale sensible à la fonction caractéristique f à un instant donné t. L'image initiale IM(t) est ainsi filtré en E.F. images directionnelles constituées chacune de I.J. composantes vectorielles associées respectivement aux pixels.

La seconde étape E2 du procédé de l'invention consiste à détecter dans l'image IM(t) des pixels caractéristiques se rapportant à des points caractéristiques de l'objet ou de la scène. Pour ce faire, on détecte tout d'abord au moyen de deux fonctions modélisant des fonctions biologiques du système visuel humain, des pixels attentionnels dans l'image IM(t). Les pixels attentionnels détectés par ces deux fonctions coïncident avec les points de neurofocalisation effectivement décelés par le couple oeil-cerveau. Le nuage de points attentionnels signalant par exemple la présence d'un sommet d'une face de l'objet à modéliser est ensuite traité par un algorithme de gradient de manière à définir, pour ce nuage de pixels attentionnels, un pixel caractéristique.

Les deux fonctions utilisées pour cette étape sont appelées Courbure Gaussienne CG et Courbure d'Iso-intensité lumineuse CI. La première fonction dite Courbure Gaussienne est définie de la manière suivante:

$$\mathtt{CG(x,y)} \;=\; (\nabla^2 G + R)\,(\nabla^2 G - R) \qquad \text{soit } \mathtt{CG(i,j,t)} =$$

$$\sum_{m=-k}^{m=k}\sum_{n=-k}^{n=k} L(i+m,j+n,t).\left[\frac{\partial^2 G(i+m,j+n)}{\partial x^2}\cdot\frac{\partial^2 G(i+m,j+n)}{\partial y^2}-\frac{\partial^2 G(i+m,j+n)}{\partial x.\partial y}\right]$$

La seconde fonction dite Courbure d'Iso-intensité lumineuse CI, correspondant par exemple à une courbure d'Isoluminance ou d'Isochrominance, dépend de la plus grande composante des dérivées directionnelles du premier ordre pour le pixel courant P(i,j), c'est-à-dire de la direction présentant la plus grande activité. Cette fonction CI est obtenue en comparant les D=8 composantes suivantes :

$$A[(\partial G(i,j)/\partial \rho)_\alpha,t]=\sum_{m=-k}^{m=k}\sum_{n=-k}^{n=k} L(i+m,j+n,t).(\partial G(i+m,j+n)/\partial \rho)_\alpha$$

pour sélectionner la plus grande composante $A[(\partial G(i,j)/\partial \rho)_\alpha,t]_{max}$ correspondant à une direction $\alpha_{max}$, c'est-à-dire la plus grande pente au pixel courant. Puis est calculée, où plutôt sélectionnée, la composante correspondant à la dérivée directionnelle du second ordre pour la direction $\alpha\perp$ perpendiculaire à la direction $\alpha_{max}$, normalisée au module du gradient, soit :

$$\mathtt{CI(i,j,t)} \;=\; \Big[A[(\partial^2 G(i,j)/\partial \rho^2)_{\alpha\perp},t]\Big]/\big|\nabla A[G(i,j),t]\big|$$

On obtient ainsi, pour chaque pixel P(i,j) et pour chaque échelle, une valeur CG(i,j,t) et CI(i,j,t). Ces valeurs sont ensuite comparées à des valeurs seuil prédéterminés, respectivement SCG et SCI. Tout pixel présentant, pour une échelle donnée, l'une des valeurs CG(i,j,t) et CI(i,j,t) supérieures à l'un respectif des deux seuils correspond alors à un pixel attentionnel de l'image. Le nombre de pixels attentionnels est fonction non seulement de la valeur des seuils SCG et SCI mais également de l'échelle s considéré. L'application d'un algorithme d'apprentissage, par exemple à rétropropagation du gradient, à une zone de pixels attentionnels permet ensuite de définir un pixel caractéristique. L'expérience montre que les grandeurs CG et CI permettent de détecter directement, sans apprentissage préalable du contenu de l'image, des éléments importants dans une image, tels que l'oeil, la bouche, le nez, les oreilles, etc. sur un visage, ou bien les crêtes et les sommets sur un polyèdre, par exemple. L'ensemble oeil-cerveau réagissant de façon similaire, les fonctions CG et CI constituent en fait une modélisation de cet ensemble fonctionnel biologique.

Bien entendu, on pourra prévoir d'autres algorithmes d'apprentissage pour modifier la détermination des pixels caractéristiques dans les images, par exemple, pour reconnaître la topologie des objets ou, de façon plus complexe, le style d'un meuble.

En variante, on pourra également utiliser un détecteur de Harris pour déterminer les points attentionnels de l'image IM(t) ou tout algorithme de détection de points attentionnels, en particulier des filtres appris non définis au départ.

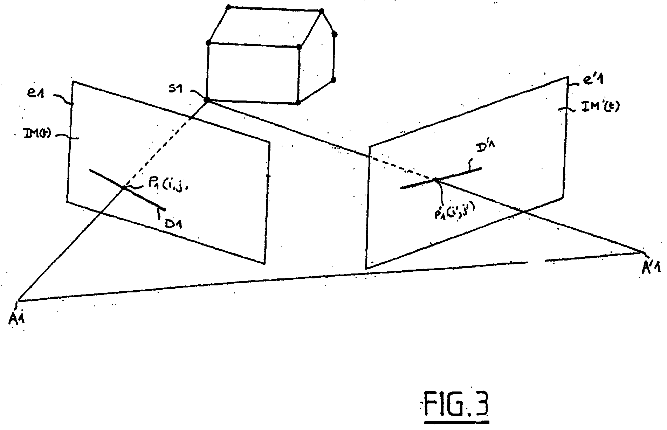

L'étape suivante, E3, consiste à apparier ou associer les pixels caractéristiques des images IM(t) et IM'(t) se rapportant au même point de l'objet ou de la scène. On parle d'appariement quand l'analyse porte sur deux images, par exemple IM(t) et IM'(t). Si l'analyse porte sur N images, on parle plus généralement d'association. Par exemple dans le cas d'une scène filmée en stéréoscopie, l'étape E3 consiste à apparier les pixels caractéristiques P(i,j) et P'(i',j') appartenant respectivement à l'image gauche IM(t) et à l'image droite IM'(t) et se rapportant au même point matériel de l'objet. Cette étape est illustrée par un exemple à la figure 3. Dans cet exemple, l'objet à modéliser est une maison dont les sommets caractéristiques sont représentés par des points noirs. Deux images IM(t) et IM'(t) représentant deux vues différentes de la maison sont visualisées sur deux écrans e1 et e'1. Un sommet S1 de la maison est représenté sur l'image IM(t) par le pixel caractéristique $P_1(i,j)$ et sur l'image IM'(t) par le pixel $P'_1(i',j')$. A1 et A'1 désignent la position des caméras produisant respectivement les images IM(t) et IM'(t). L'étape E3 a pour but d'apparier tous les pixels caractéristiques des images IM(t) et IM'(t) se rapportant à un même point caractéristique de l'objet, et en particulier à apparier $P_1(i,j)$ avec $P'_1(i',j')$ se rapportant tous deux au sommet S1.

L'appariement est effectué en deux temps. Dans un premier, temps, on détermine la matrice fondamentale qui définit la géométrie du système d'observation, c'est-à-dire la position des caméras générant les images IM(t) et IM'(t) par rapport à l'objet filmé. Dans un second temps, on calcule au moyen de la matrice fondamentale tous les appariés des pixels caractéristiques de l'image IM(t).

La matrice fondamentale est déterminée à partir de quelques pixels caractéristiques des images IM(t) et TM'(t) se rapportant à des points caractéristiques primaires de l'objet. Ces points caractéristiques primaires sont les points dont les hyperpixels associés dans chaque image sont identiques. En pratique, huit points caractéristiques primaires suffisent à cette détermination. La matrice fondamentale permet d'effectuer la correspondance entre les pixels de l'image IM(t) et ceux de l'image IM'(t). Dans la figure 3, l'intersection entre le plan (S1,A1,A'1) et les écrans e1 et e'1 définit deux droites épipolaires, D1 et D'1, respectivement dans IM(t) et IM'(t). La matrice fondamentale permet alors d'obtenir les coefficients directeurs de D'1 à partir de ceux de D1. Ainsi, sachant que « pour tout pixel P(i,j) appartenant à la droite épipolaire D1, le pixel associé ou apparié P'(i',j') appartient à la droite D'1 », il est alors possible d'apparier tous les pixels caractéristiques P(i,j) de IM(t) avec les pixels caractéristiques P'(i',j') de IM'(t) par technique épipolaire.

On peut ensuite calculer, à l'étape E4, mesurer la disparité spatiale (disparité stéréoscopique) entre les images IM(t) et IM'(t) à partir de la différence de position de chaque point caractéristique dans ces deux images et en déduire les coordonnées spatiales x, y, z pour l'ensemble des points caractéristiques de l'objet.

Une fois que la position spatiale des points caractéristiques de l'objet est définie, ces points sont « maillés » entre eux de manière à reconstituer les polygones composant l'objet ou la scène. Cette étape de maillage correspondant à l'étape E5 du procédé de modélisation de l'invention consiste à relier les points caractéristiques de l'objet pour former des polygones. Pour ce faire, il existe des méthodes connues de maillage d'un nuage de points se basant sur des algorithmes de triangulation automatique de type Voronoï ou Delaunay. Ces méthodes sont bien connues en traitement d'image.

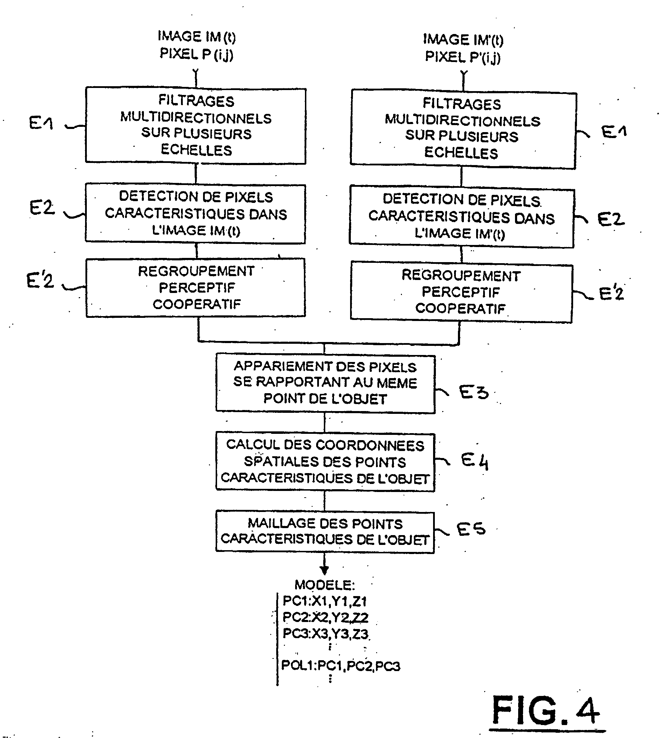

Selon un mode de réalisation en variante, le procédé de modélisation comporte une étape supplémentaire E'2, appelée étape de regroupement perceptif coopératif, permettant de regrouper les pixels appartenant à une zone perceptuellement homogène de l'image. Cette étape a pour but d'améliorer l'étape de maillage du procédé de l'invention. Cette étape de regroupement perceptif est effectuée sur chaque image après l'étape E2. Cette variante est illustrée à la figure 4.

A l'étape E'2 implémentée dans une couche de cellules neuronales, des pixels appartenant à des zones perceptuellement homogènes dans l'image sont regroupés de façon fine. De telles zones peuvent être des zones dans une image présentant une texture se répétant de façon uniforme.

Le regroupement coopératif perceptif consiste à effectuer pour chaque pixel P(i,j), et pour chaque fonction A [f(i,j),t] caractérisant une activité d'une cellule neuronale, une fonction de base itérative du type suivant :

$$A_q[f(i,j),t] \quad = \quad \beta \cdot A_{q-1}[f(i,j),t]$$

$$+ \sum_{m=-h}^{m=h} \sum_{n=-h}^{n=h} \phi(P(i,j), P(i+m,j+n)) \cdot A_{q-1}[f(i+m,j+n),t]$$

$$\text{avec } (m,n) \neq (0,0)$$

où

$A_q[f(i,j),t]$ représente l'activité du pixel courant P(i,j) dans l'image IM(t), associée à la fonction caractéristique f à l'itération q,

$A_{q-1}(i+m,j+n,t)$ représente l'activité d'un pixel P(i+m, j+n) voisin du pixel P(i,j), associée à la même fonction caractéristique f mais à l'itération précédente q-1, c'ést-à-dire l'activité du pixel voisin est relative à l'itération précédente,

$\beta$ est une constante sensiblement inférieure à 1,

q est un entier compris entre 0 et Q,

et $\phi(P(i,j), P(i+m,j+n))$ est un coefficient de couplage entre les pixels P(i,j) et P(i+m, j+n) inférieur à 1.

Typiquement, la somme porté sur les B=4 pixels voisins du pixel courant P(i,j), soit les pixels P(i-1,j), P(i+1,j), P(i,j-1) et P(i,j+1), correspondant à h = B/4 = 1, soit m = ± 1 et n = ± 1, relativement à l'activité de l'itération précédente. Des exemples de fonction de couplage $\phi$ sont donnés dans le brevet FR-A-2744786.

Cette fonction de regroupement perceptif est effectuée en parallèle pour chaque fonction $(\partial G/\partial \rho)_\alpha$ et $(\partial^2 G/$

$\partial \rho^2)_\alpha$ dans les E échelles et pour chaque pixel P(i,j). Les fonctions $A_q[f(i,j),t]$ se rapportant à un même pixel P(i,j) constituent alors les composantes d'un vecteur colonne. $A_0[f(i,j),t]$ est égal à l'activité A[f(i,j),t] définie à l'étape de détection. Après un nombre prédéterminé d'itération, les vecteurs colonnes des pixels appartenant à une zone homogène de l'image convergent vers la même valeur limite à une petite incertitude près. Les pixels P(i,j) appartenant à la même zone homogène de l'image sont ainsi regroupés.

Le résultat du regroupement perceptif peut alors contribuer à améliorer le résultat de l'étape de maillage du procédé en rajoutant une condition supplémentaire: les points qui sont maillés pour former un polygone, doivent appartenir à une même zone homogène. Cela veut dire que dans le modèle donné à titre d'exemple dans la figure 4, les points caractéristiques PC1, PC2 et PC3 formant le polygone POL1 appartiennent à la même zone homogène de l'image. Le modèle obtenu en fin de procédé pourra avantageusement être complété par un plan de texture indiquant la texture de chaque polygone.

Le nombres de polygones obtenus en fin de procédé est fonction de l'échelle retenue dans l'étape E2 de détection des pixels caractéristiques. Plus. le motif carré s par S est de petite taille, plus le nombre de polygones est élevé. On peut ainsi modifier le niveau de détail de l'objet en agissant sur l'échelle retenue pour l'étape de détection E2.

La principale application des procédés de modélisation est la visualisation temps réel d'un objet. La Visualisation d'un objet sur un écran dépend de sa distance d'observation et de son angle d'observation. Si la distance d'observation est importante, le niveau de détail de la visualisation est faible. Par ailleurs, suivant l'angle d'observation, certaines parties de l'objet ne sont pas visibles et ne sont donc pas à visualiser.

Selon l'invention, on propose de visualiser l'objet en ayant préalablement modélisé cet objet sous plusieurs échelles, chaque échelle se rapportant à un niveau de détail particulier. La distance d'observation retenue au moment de la visualisation de l'objet, va conditionner le choix d'un niveau de détail et donc celui d'une échelle. Dans un exemple, on considère un objet modélisé selon trois échelles E1, E2 et E3. Selon l'échelle E1, le modèle obtenu en fin de procédé de modélisation comporte 2000 polygones. Selon E2, il comporte 1000 polygones et selon E3, il comporte 500 polygones. Lors de la visualisation, un modèle est choisi en fonction de la distance d'observation retenue. Ainsi, au delà de 100 mètres, l'objet est visualisé avec 500 polygones. Entre 50 et 100 mètres, il est visualisé avec 1000 polygones et en deçà de 50 mètres, il est visualisé avec 2000 polygones.

Les techniques de visualisation habituelles utilisent généralement un modèle défini de façon très fine auquel on applique un algorithme géométrique de réduction des points et des polygones. Les résultats obtenus sont bons lorsque que le taux de réduction n'est pas très élevé et que toutes les parties de l'objet sont fortement maillées (cas de la modélisation par exploration laser). Dans les autres cas, les résultats sont médiocres voire catastrophiques.

La visualisation telle que présentée dans le présent exposé prend en compte le contenu sémantique de l'objet quel que soit le niveau de détail voulu. Quel que soit le modèle retenu pour visualiser l'objet, celui-ci a été généré en se basant sur les points attentionnels de l'objet à une échelle donnée et n'a pas subi de simplification géométrique.

Si on considère un système de visualisation automatique d'objet comportant un serveur dans lequel sont sauvegardés les modèles des objets à différentes échelles, et des terminaux de visualisation, seul le modèle correspondant à la distance d'observation choisie est transmis par le serveur au terminal de visualisation concerné. Suivant la distance d'observation choisie, le terminal de visualisation sélectionne le modèle qu'il veut recevoir. De même, suivant l'angle de vue choisie, le serveur ne transmet que les éléments du modèle apparaissant dans cette vue. Cette technique de visualisation permet ainsi de réduire le temps et le coût de transmission des objets et a pour autre conséquence d'améliorer les performances temps réel des terminaux de visualisation.

Dans un système de visualisation temps réel optimisé, on pourra prévoir également de modéliser une scène à partir de N images originales, de calculer les images de synthèse correspondantes, d'analyser ensuite les images de synthèse selon le procédé de modélisation de l'invention, puis de comparer les images originales avec les images de synthèse de manière à affiner les filtres utilisés dans le procédé de l'invention. Un apprentissage des coefficients des filtres peut être utilisé pour faire converger les images de synthèse vers les images originales.

**Revendications**

1. Procédé de modélisation d'objet ou de scène tridimensionnel à partir de N images (IM(t), IM'(t)) spatialement ou temporellement différentes représentant ledit objet ou ladite scène, N≥2, destiné à produire un modèle dudit objet ou de ladite scène consistant en une pluralité de points caractéristiques (PC1, PC2, PC3) et une pluralité de polygones (POL1) définis à partir desdits points caractéristiques et constituant les diverses facettes dudit objet ou de ladite scène,

   **caractérisé** en ce'qu'il comporte les étapes suivantes

   - détecter dans chaque image des pixels caractéristiques relatifs aux points caractéristiques dudit objet ou de ladite scène,

- associer les pixels caractéristiques des N images se rapportant au même point caractéristique dudit objet ou de ladite scène,
- mesurer la disparité spatiale entre les N images à partir de la différence de position de chaque point caractéristique dans les N images et en déduire les coordonnées spatiales des points caractéristiques dudit objet ou de ladite scène,
- effectuer une étape de maillage des points caractéristiques pour former les polygones constituant les diverses facettes dudit objet ou de ladite scène.

2. Procédé de modélisation selon la revendication 1, **caractérisé en ce que**, pour détecter les pixels caractéristiques dans les N images, on effectue, pour chaque image IM(t) composée de I.J pixels P(i,j) ayant des coordonnées telles que telles que $0<i<I-1$ et $0<j<J-1$ et des intensités lumineuses L(i,j,t) et pour chaque pixel P(i,j) de l'image, les étapes suivantes :

- effectuer pour chaque pixel P(i,j) de l'image, D doubles filtrages directionnels pour D directions prédéterminées, définis chacun par les deux relations suivantes :

$$A[(\partial G(i,j)/\partial\rho)_\alpha,t] = \sum_{m=-k}^{m=k}\sum_{n=-k}^{n=k}L(i+m,j+n,t).(\partial G(i+m,j+n)/\partial\rho)_\alpha$$

et

$$A[(\partial^2 G(i,j)/\partial\rho^2)_\alpha,t] = \sum_{m=-k}^{m=k}\sum_{n=-k}^{n=k}L(i+m,j+n,t).(\partial^2 G(i+m,j+n)/\partial\rho^2)_\alpha$$

dans lesquelles k est un entier prédéterminé au moins égal à 1, L(i+m,j+n,t) est l'intensité lumineuse à un pixel P(i+m,j+n) voisin du pixel P(i,j), et $(\partial G(i+m,j+n,t)/\partial\rho)_\alpha$ et $(\partial G^2(i+m,j+n,t)/\partial\rho^2)_\alpha$ sont des dérivées directionnelles du premier ordre et du second ordre suivant la direction prédéterminée respective ($\alpha$) d'une fonction bidimensionnelle prédéterminée G, de manière à former I.J vecteurs colonnes de pixels composés de 2D composantes vectorielles,
- calculer une fonction de courbure selon la relation :

$$\mathtt{CG(i,j,t)} = \sum_{m=-k}^{m=k}\sum_{n=-k}^{n=k}L(i+m,j+n,t).\left[\frac{\partial^2 G(i+m,j+n)}{\partial x^2}.\frac{\partial^2 G(i+m,j+n)}{\partial y^2} - \frac{\partial^2 G(i+m,j+n)}{\partial x.\partial y}\right]$$

- détecter la direction présentant la plus grande activité en sélectionnant la plus grande dérivée directionnelle du premier ordre pour le pixel P(i,j),
- calculer une fonction d'iso-intensité (CI) dépendant de la dérivée directionnelle du second ordre pour une direction perpendiculaire à la direction présentant la plus grande activité; et
- comparer les fonctions de courbure et les fonctions d'iso-intensité par rapport à des seuils prédéterminés, les pixels caractéristiques présentant au moins l'une des fonctions de courbure ou d'isoluminance supérieure à l'un respectif de deux seuils prédéterminés.

3. Procédé de modélisation selon la revendication 2, **caractérisé en ce que** la fonction prédéterminée G est gaussienne.

4. Procédé de modélisation selon l'une des revendications 1 à 3, **caractérisé en ce que**, pour associer les pixels caractéristiques des N images se rapportant au même point caractéristique dudit objet ou de ladite scène, on effectue les étapes suivantes:

- détermination d'une matrice fondamentale à partir de pixels caractéristiques primaires ayant des vecteurs colonnes identiques dans les N images, cette matrice établissant une correspondance entre les pixels des N images,

-   association des pixels caractéristiques des N images se rapportant à même point caractéristique à l'aide de la matrice fondamentale.

**5.** Procédé de modélisation selon l'une des revendications 1 à 4, **caractérisé en ce que**, pour mailler les points caractéristiques dudit objet ou de ladite scène, on applique un algorithme de triangulation automatique.

**6.** Procédé de modélisation selon la revendication 5, **caractérisé en ce qu'**il comporte en outre une étape de regroupement perceptif pour regrouper les pixels de chaque image appartenant à une zone perceptuellement homogène de l'image en effectuant, pour chaque image et chaque pixel, Q itérations d'une fonction telle que :

$$A_q[f(i,j),t] = \beta . A_{q-1}[f(i,j),t]$$
$$+ \sum_{m=-h}^{m=h} \sum_{n=-h}^{n=h} \phi(P(i,j), P(i+m,j+n)). A_{q-1}[f(i+m,j+n),t]$$
$$\text{avec } (m,n) \neq (0,0)$$

où

$A_q[f(i,j),t]$ représente l'activité du pixel courant $P(i,j)$ dans l'image $IM(t)$, associée à la fonction caractéristique $f$ à l'itération $q$,

$A_{q-1}[f(i+m,j+n),t]$ représente l'activité d'un pixel $P(i+m, j+n)$ voisin du pixel $P(i,j)$, associée à la même fonction caractéristique $f$ mais à l'itération précédente $q-1$, c'est-à-dire l'activité du pixel voisin est relative à l'itération précédente,

$\beta$ est une constante sensiblement inférieure à 1,

$q$ est un entier compris entre 0 et Q, et

$\phi(P(i,j), P(i+m,j+n))$ est un coefficient de couplage entre les pixels $P(i,j)$ et $P(i+m, j+n)$ inférieur à 1,

et en regroupant dans une table tous les pixels voisins entre eux dont l'activité converge après Q itérations vers la même valeur limite.

**7.** Procédé de modélisation selon la revendication 6, **caractérisé en ce que**, pendant l'étape de maillage, on vérifie que les points caractéristiques des polygones définis par la méthode de triangulation automatique, appartiennent à la même zone homogène.

**8.** Procédé de visualisation temps réel d'un objet ou d'une scène, mettant en oeuvre le procédé de modélisation selon l'une des revendications précédentes, **caractérisé en ce que** l'objet ou la scène est préalablement modélisé suivant E échelles et **en ce que** le modèle d'objet ou de scène qui est visualisé, est choisi parmi les E modèles résultant des E échelles, ce choix étant fonction de la distance d'observation de l'objet ou de la scène.

**Patentansprüche**

**1.** Verfahren zum Modellieren eines Objektes oder dreidimensionalen Beobachtungsraums aus N Bildern (IM(t), IM'(t)), die sich räumlich oder zeitlich unterscheiden und die das Objekt oder den Beobachtungsraum darstellen, N≥2, um ein Modell des Objekts oder des Beobachtungsraums aus mehreren kennzeichnenden Punkten (PC1, PC2, PC3) und mehreren Polygonen (POL1), die durch die kennzeichnenden Punkte definiert werden und verschiedene Flächen des Objekts oder des Beobachtungsraums bilden, zu erzeugen, **dadurch gekennzeichnet, dass** es die folgenden Schritte umfasst:

Erfassen von kennzeichnenden Pixeln mit Bezug auf kennzeichnende Punkte des Objekts oder des Beobachtungsraums in jedem Bild,

Verknüpfen der kennzeichnenden Pixel der N Bilder, die sich auf den gleichen kennzeichnenden Punkt des Objekts oder des Beobachtungsraums beziehen,

Messen der räumlichen Abweichung von N Bildern aus der Differenz der Position jedes kennzeichnenden Punktes in den N Bildern und Ableiten der räumlichen Koordinaten der kennzeichnenden Punkte des Objekts oder des Beobachtungsraums daraus,
Vernetzen von kennzeichnenden Punkten zum Erzeugen der Polygone, die die verschiedenen Flächen des Objekts oder des Beobachtungsraums bilden.

2.   Verfahren zum Modellieren nach Anspruch 1, **dadurch gekennzeichnet, dass** zum Erfassen der kennzeichnenden Pixel in den N Bildern bei jedem Bild IM(t) aus I·J Pixeln P(i, j) mit Koordinaten, für die 0 < i < I-1 und 0 < j < J-1 gilt, und Belichtungsintensitäten L(i, j, t) bei jedem Pixel P(i, j) des Bildes die folgenden Schritte durchgeführt werden:

Durchführen von D Doppelrichtungsfilterungen für D vorgegebene Richtungen bei jedem Pixel P(i, j) des Bildes, die jeweils durch die beiden folgenden Relationen definiert sind:

$$A[(\partial G(i,j)/\partial p)_\alpha, t] = \sum_{m=-k}^{m=k} \sum_{n=-k}^{n=k} L(i+m, j+n, t).(\partial G(i+m, j+n)/\partial p)_\alpha$$

und

$$A[(\partial^2 G(i,j)/\partial p^2)_\alpha, t] = \sum_{m=-k}^{m=k} \sum_{n=-k}^{n=k} L(i+m, j+n, t).(\partial^2 G(i+m, j+n)/\partial p^2)_\alpha$$

wobei k eine vorgegebene ganze Zahl größer gleich 1 ist, L(i + m, j + n, t) die Belichtungsintensität bei einem Pixel P(i + m, j + n) neben dem Pixel P(i, j) ist und $(\partial G(i+m, j+n, t)/\partial p)_\alpha$ und $(\partial G^2(i+m, j+n, t)/\partial p^2)_\alpha$ Richtungsableitungen erster Ordnung und zweiter Ordnung in der jeweils vorgegebenen Richtung ($\alpha$) einer zweidimensionalen vorgegebenen Funktion G sind, so dass I·J Spaltenvektoren von Pixeln mit 2D Vektorkomponenten erzeugt werden,
Berechnen einer Krümmungsfunktion nach der Relation: CG(i, j, t) =

$$CG(i,\ j,\ t) = \sum_{m=-k}^{m=k} \sum_{n=-k}^{n=k} L(i+m, j+n, t).\left[ \frac{\partial^2 G(i+m, j+n)}{\partial x^2} . \frac{\partial^2 G(i+m, j+n)}{\partial y^2} - \frac{\partial^2 G(i+m, j+n)}{\partial x.\partial y} \right]$$

Erfassen der Richtung mit der größten Aktivität durch Auswählen der größten Richtungsableitung erster Ordnung bei dem Pixel P(i, j),
Berechnen einer Funktion (CI) mit konstanter Intensität in Abhängigkeit von der Richtungsableitung zweiter Ordnung bei einer Richtung senkrecht zu der Richtung mit der größten Aktivität und
Vergleichen der Krümmungsfunktionen und der Funktionen mit konstanter Intensität mit vorgegebenen Schwellenwerten, wobei die kennzeichnenden Pixel wenigstens bei einer der Krümmungsfunktionen oder Funktionen mit konstanter Belichtung größer als einer von zwei vorgegebenen Schwellenwerten sind.

3.   Verfahren zum Modellieren nach Anspruch 2, **dadurch gekennzeichnet, dass** die vorgegebene Funktion G eine Gauß-Funktion ist.

4.   Verfahren zum Modellieren nach einem der Ansprüche 1 bis 3, **dadurch gekennzeichnet, dass** zum Verknüpfen der kennzeichnenden Pixel von N Bildern, die sich auf den gleichen kennzeichnenden Punkte des Objekts oder des Beobachtungsraums beziehen, die folgenden Schritte durchgeführt werden:

Bestimmen einer Fundamentalmatrix aus primären kennzeichnenden Pixeln mit identischen Spaltenvektoren in den N Bildern, wobei diese Matrix eine Beziehung zwischen den Pixeln der N Bilder herstellt,
Verknüpfen von kennzeichnenden Pixeln in N Bildern, die sich auf den gleichen kennzeichnenden Punkt beziehen, mit Hilfe der Fundamentalmatrix.

**5.** Verfahren zum Modellieren nach einem der Ansprüche 1 bis 4, **dadurch gekennzeichnet, dass** zum Vernetzen der kennzeichnenden Punkte des Objekts oder des Beobachtungsraums ein Algorithmus zur automatischen Triangulation angewendet wird.

**6.** Verfahren zum Modellieren nach Anspruch 5, **dadurch gekennzeichnet, dass** es außerdem eine perzeptive Neugruppierung zum Gruppieren von Pixeln jedes Bildes in einer homogenen Wahrnehmungszone des Bildes umfasst, bei der bei jedem Bild und jedem Pixel Q Iterationen einer Funktion:

$$A_q[f(i, j), t] = \beta \cdot A_{q-1}[f(i, j), t]$$
$$+ \sum_{m=-h}^{m=h} \sum_{n=-h}^{n=h} \phi(P(i, j), P(i + m, j + n)) . A_{q-1}[f(i + m, j + n), t]$$

durchgeführt werden, wobei $(m, n) \neq (0, 0)$ und $Aq[f(i, j), t]$ die Aktivität des aktuellen Pixels $P(i, j)$ in dem Bild IM (t) zu der kennzeichnenden Funktion f bei der Iteration q darstellt,
$A_{q-1}[f(i + m, j + n), t]$ die Aktivität eines Pixels $P(i + m, j + n)$ neben dem Pixel $P(i, j)$ zu der gleichen kennzeichnenden Funktion f, jedoch bei der vorangehenden Iteration q-1, darstellt, d.h. die Aktivität des Nachbarpixels in Bezug auf die vorangehende Iteration,
$\beta$ eine Konstante ist, die wesentlich kleiner als 1 ist,
q eine ganze Zahl zwischen 0 und Q ist und
$\Phi(P(i, j), P(i + m, j + n))$ ein Kopplungskoeffizient zwischen den Pixeln $P(i, j)$ und $P(i + m, j + n)$ ist, der kleiner als 1 ist, und in einer Tabelle alle Nachbarpixel zwischen denen neu gruppiert werden, deren Aktivität nach Q Iterationen gegen denselben Grenzwert strebt.

**7.** Verfahren zum Modellieren nach Anspruch 6, **dadurch gekennzeichnet, dass** während der Vernetzung verifiziert wird, dass die kennzeichnenden Punkte der Polygone, die durch das Verfahren der automatischen Triangulation definiert wurden, aus derselben homogenen Zone stammen.

**8.** Verfahren zum Visualisieren eines Objekts oder eines Beobachtungsraums in Echtzeit, bei dem das Verfahren zum Modellieren nach einem der vorangehenden Ansprüche eingesetzt wird, **dadurch gekennzeichnet, dass** das Objekt oder der Beobachtungsraum vorher E Skalen entsprechend modelliert wird und dass das Modell des Objekts oder des Beobachtungsraums zur Visualisierung unter den E Modellen gewählt wird, die sich aus den E Skalen ergeben, wobei diese Wahl in Abhängigkeit von dem Beobachtungsabstand von dem Objekt oder dem Beobachtungsraum getroffen wird.

**Claims**

**1.** Method of modelling a three-dimensional object or scene from N spatially or temporally different images (IM(t), IM' (t)) representing said object or said scene, N≥2, designed to produce a model of said object or said scene consisting of a plurality of characteristic points (PC1, PC2, PC3) and a plurality of polygons (POL1) defined from said characteristic points and constituting the diverse facets of said object or said scene,
**characterised in that** it comprises the following steps

- detecting in each image characteristic pixels relating to the characteristic points of said object or said scene,
- associating the characteristic pixels of the N images relating to the same characteristic point of said object or said scene,
- measuring the spatial disparity between the N images from the difference in position of each characteristic point in the N images and deducing therefrom the spatial co-ordinates of the characteristic points of said object or said scene,

- effecting a step of linking the characteristic points to form the polygons constituting the diverse facets of said object or said scene.

2. Method of modelling according to claim 1, **characterised in that** in order to detect the characteristic pixels in the N images, the following steps are effected for each image IM(t) composed of I.J pixels P(i,j) having co-ordinates such as 0<i<I-1 and 0<j<J-1 and luminous intensities L(i,j,t) and for each pixel P(i,j) of the image:

- effecting for each pixel P(i,j) of the image D double directional filtering operations for D predetermined directions, each defined by the following two relations:

$$A\left[(\partial G(i,j)/\partial\rho)_\alpha,t\right]=\sum_{m=-k}^{m=k}\sum_{n=-k}^{n=k}L(i+m,j+n,t).(\partial G(i+m,j+n)/\partial\rho)_\alpha$$

and

$$A\left[(\partial^2 G(i,j)/\partial\rho^2)_\alpha,t\right]=\sum_{m=-k}^{m=k}\sum_{n=-k}^{n=k}L(i+m,j+n,t).(\partial^2 G(i+m,j+n)/\partial\rho^2)_\alpha$$

in which k is a predetermined integer at least equal to 1, L(i+m,j+n,t) is the luminous intensity at a pixel P(i+m, j+n) neighbouring the pixel P(i,j), and $(\partial G(i+m,j+n,t)/\partial\rho)_\alpha$ and $(\partial G^2(i+m,j+n,t)/\partial\rho^2)_\alpha$ are directional derivatives of the first order and the second order in the respective predetermined direction ($\alpha$) of a predetermined bidi-mensional function G, such as to form I.J column vectors of pixels composed of 2D vectorial components,
- calculating a bending function according to the relation:

$$CG(i,j,t) =$$

$$\sum_{m=-k}^{m=k}\sum_{n=-k}^{n=k}L(i+m,j+n,t)\left[\frac{\partial^2 G(i+m,j+n)}{\partial x^2}\cdot\frac{\partial^2 G(i+m,j+n)}{\partial y^2}-\frac{\partial^2 G(i+m,j+n)}{\partial x.\partial y}\right]$$

- detecting the direction exhibiting the greatest activity by selecting the greatest directional derivative of the first order for the pixel P(i,j),
- calculating an iso-intensity function (CI) depending on the directional derivative of the second order for a direction perpendicular to the direction exhibiting the greatest activity, and
- comparing the bending functions and the iso-intensity functions in relation to predetermined thresholds, the characteristic pixels exhibiting at least one of the bending functions or iso-luminance functions greater than respectively one of two predetermined thresholds.

3. Method of modelling according to claim 2, **characterised in that** the predetermined function G is Gaussian.

4. Method of modelling according to one of claims 1 to 3, **characterised in that** in order to associate the characteristic pixels of the N images relating to the same characteristic point of said object or said scene, the following steps are effected:

- determining a fundamental matrix from primary characteristic pixels having identical column vectors in the N images, this matrix establishing a correspondence between the pixels of the N images,
- associating the characteristic pixels of the N images relating to a same characteristic point with the aid of the fundamental matrix.

5. Method of modelling according to one of claims 1 to 4, **characterised in that** in order to link the characteristic points of said object or said scene, an automatic triangulation algorithm is applied.

6. Method of modelling according to claim 5, **characterised in that** it additionally comprises a perceptive collecting step in order to collect the pixels of each image belonging to a perceptually homogeneous zone of the image by effecting for each image and each pixel Q iterations of a function such that:

$$A_q[f(i,j),t] \quad = \quad \beta.A_{q-1}[f(i,j),t]$$

$$+ \sum_{m=-h}^{m=h} \sum_{n=-h}^{n=h} \phi(P(i,j), P(i+m, j+n)).A_{q-1}[f(i+m, j+n), t]$$

$$\text{with } (m,n) \neq (0,0)$$

in which

$A_q[f(i,j),t]$ represents the activity of the current pixel P(i,j) in the image IM(t), associated with the characteristic function f at iteration q,

$A_{q-1}[f(i+m,j+n),t]$ represents the activity of a pixel P(i+m,j+n) neighbouring the pixel P(i,j), associated with the same characteristic function f but at the preceding iteration q-1, i.e. the activity of the neighbouring pixel is relative to the preceding iteration,

$\beta$ is a constant substantially less than 1,

q is an integer lying between 0 and Q, and

$\phi(P(i,j), P(i+m,j+n))$ is a coupling coefficient between the pixels P(i,j) and P(i+m,j+n) less than 1,

and by collecting in a table all the neighbouring pixels the activity of which converges after Q iterations towards the same limit value.

7. Method of modelling according to claim 6, **characterised in that** during the linking step checks are made to ensure that the characteristic points of the polygons defined by the automatic triangulation method belong to the same homogeneous zone.

8. Method of displaying an object or a scene in real time, implementing the method of modelling according to one of the preceding claims, **characterised in that** the object or the scene is modelled first with E scales and **in that** the model of the object or scene which is displayed is selected from the E models resulting from the E scales, this choice being a function of the distance of observation of the object or the scene.

IMAGE IM (t)
PIXEL P (i,j)

IMAGE IM'(t)
PIXEL P'(i,j)

E1 —

FILTRAGES
MULTIDIRECTIONNELS
SUR PLUSIEURS
ECHELLES

FILTRAGES
MULTIDIRECTIONNELS
SUR PLUSIEURS
ECHELLES

— E1

E2 —

DETECTION DE PIXELS
CARACTERISTIQUES DANS
L'IMAGE IM (t)

DETECTION DE PIXELS
CARACTERISTIQUES DANS
L'IMAGE IM'(t)

— E2

APPARIEMENT DES PIXELS
SE RAPPORTANT AU MEME
POINT DE L'OBJET

— E3

CALCUL DES COORDONNEES
SPATIALES DES POINTS
CARACTERISTIQUES DE L'OBJET

— E4

MAILLAGE DES POINTS
CARACTERISTIQUES DE L'OBJET

— E5

MODELE:
PC1:X1,Y1,Z1
PC2:X2,Y2,Z2
PC3:X3,Y3,Z3
⋮
POL1.PC1,PC2,PC3
⋮

# FIG.1

17

# FIG.2

FIG.3

IMAGE IM (t)
PIXEL P (i,j)

IMAGE IM'(t)
PIXEL P'(i,j)

E1 — FILTRAGES MULTIDIRECTIONNELS SUR PLUSIEURS ECHELLES — E1

E2 — DETECTION DE PIXELS CARACTERISTIQUES DANS L'IMAGE IM (t) — E2

E'2 — REGROUPEMENT PERCEPTIF COOPERATIF — E'2

APPARIEMENT DES PIXELS SE RAPPORTANT AU MEME POINT DE L'OBJET — E3

CALCUL DES COORDONNEES SPATIALES DES POINTS CARACTERISTIQUES DE L'OBJET — E4

MAILLAGE DES POINTS CARACTERISTIQUES DE L'OBJET — E5

MODELE:
PC1:X1,Y1,Z1
PC2:X2,Y2,Z2
PC3:X3,Y3,Z3
⋮
POL1:PC1,PC2,PC3
⋮

## FIG.4